# EUROPEAN PATENT APPLICATION

(11) **EP 4 657 169 A1**
(43) Date of publication of application: **03.12.2025**
(21) Application number: 25179917.7
(22) Date of filing: 30.05.2025
(51) Int. Cl.: G03G 15/00, G03G 21/16, H04N 1/00

(54) **IMAGE FORMING APPARATUS**

(30) Priority: 31.05.2024 JP 2024088591
(71) Applicant: KYOCERA Document Solutions Inc., Osaka-shi, Osaka 540-8585 (JP)
(72) Inventor: Yamada, Masayuki, Osaka-shi, 540-8585 (JP); Okauchi, Yoshifumi, Osaka-shi, 540-8585 (JP)
(74) Representative: Plougmann Vingtoft a/s

(57) **Abstract**

A cable cover (5) covers a portion of a cable (30) ranging from a swing member (42) to a main body (1). The cable cover (5) includes a plurality of element cover members (50) which are arranged while sequentially overlapping each other and are coupled while being capable of changing an overlapping state thereof. The plurality of element cover members (50) include a first element cover member (51) coupled to the swing member (42), and one or a plurality of second element cover members (52) supported by the support shaft (40) while being rotatable about a tilt axis line. By the plurality of element cover members (50) partially rotating in conjunction with a rotation of the swing member (42) and the overlapping state of the plurality of element cover members (50) thus being changed, the cable cover (5) is capable of expanding and contracting in accordance with the rotation of the swing member (42).

## Description

This application is based upon and claims the benefit of priority from the corresponding Japanese Patent Application No. 2024-088591 filed on May 31, 2024, the entire contents of which are incorporated herein by reference.

### BACKGROUND

The present disclosure relates to an image forming apparatus including a mechanism which rotatably supports a display unit.

An image forming apparatus such as a printer, a copying machine, or a multifunction peripheral includes a display unit capable of displaying various types of information and images. The image forming apparatus may further include a support mechanism which rotatably supports the display unit 3 and realizes a so-called tilt function.

For example, the support mechanism is known to include a hinge mechanism including two pivot shafts and a flat and hollow hinge cover that covers the hinge mechanism. The hinge cover covers a cable connected to the display unit together with the hinge mechanism.

### SUMMARY

An image forming apparatus according to an aspect of the present disclosure includes a main body, a display unit, a support mechanism, a cable, and a cable cover. The main body incorporates therein a printing device which forms an image on a sheet. The support mechanism is fixed to the main body and supports the display unit. The cable has one end connected to the display unit. The cable cover covers a part of the cable. The support mechanism includes a base member, a support shaft, a swing member, and a unit coupling mechanism. The base member is fixed to the main body. The support shaft is supported by the base member while being provided along a first direction that is a left-right direction of the main body. The swing member is supported by the support shaft while being rotatable about a tilt axis line that passes through a center of the support shaft, and is formed with a main opening that penetrates in a second direction that is a thickness direction of the display unit. The unit coupling mechanism couples the swing member and a back surface of the display unit. The cable is wired from the back surface of the display unit into the main body via an inside of the main opening. The cable cover covers a portion of the cable ranging from the swing member to the main body. The cable cover includes a plurality of element cover members which are arranged while sequentially overlapping each other and are coupled while being capable of changing an overlapping state thereof. The plurality of element cover members include a first element cover member coupled to the swing member, and one or a plurality of second element cover members supported by the support shaft while being rotatable about the tilt axis line. By the plurality of element cover members partially rotating in conjunction with a rotation of the swing member and the overlapping state of the plurality of element cover members thus being changed, the cable cover is capable of expanding and contracting in accordance with the rotation of the swing member.

This Summary is provided to introduce a selection of concepts in a simplified form that are further described below in the Detailed Description with reference where appropriate to the accompanying drawings. This Summary is not intended to identify key features or essential features of the claimed subject matter, nor is it intended to be used to limit the scope of the claimed subject matter. Furthermore, the claimed subject matter is not limited to implementations that solve any or all disadvantages noted in any part of this disclosure.

### BRIEF DESCRIPTION OF THE DRAWINGS

Fig. 1 is a front view of an image forming apparatus according to an embodiment;
Fig. 2 is a first side view of the image forming apparatus according to the embodiment (a state where a display unit is in a forward attitude);
Fig. 3 is a second side view of the image forming apparatus according to the embodiment (a state where the display unit is in an upward attitude);
Fig. 4 is a diagram showing a schematic internal configuration of a main body in the image forming apparatus according to the embodiment;
Fig. 5 is a first perspective view of a support mechanism in the image forming apparatus according to the embodiment (a state where the support mechanism supports the display unit in a horizontally-long attitude);
Fig. 6 is a second perspective view of the support mechanism in the image forming apparatus according to the embodiment (a state where the support mechanism supports the display unit in a vertically-long attitude);
Fig. 7 is a perspective view of the support mechanism from which a unit support member and a leaf spring have been removed in the image forming apparatus according to the embodiment;
Fig. 8 is a front view of the support mechanism from which the unit support member has been removed in the image forming apparatus according to the embodiment;
Fig. 9 is a perspective view of a base member and a swing member of the support mechanism in the image forming apparatus according to the embodiment;
Fig. 10 is a perspective view of a rotation member of the support mechanism seen from a front side in the image forming apparatus according to the embodiment;
Fig. 11 is a perspective view of the rotation member of the support mechanism seen from a rear side in the image forming apparatus according to the embodiment;
Fig. 12 is a perspective view of an intervention member of the support mechanism seen from the front side in the image forming apparatus according to the embodiment;
Fig. 13 is a perspective view of the intervention member of the support mechanism seen from the rear side in the image forming apparatus according to the embodiment;
Fig. 14 is a perspective view of a reinforcement member of the support mechanism in the image forming apparatus according to the embodiment;

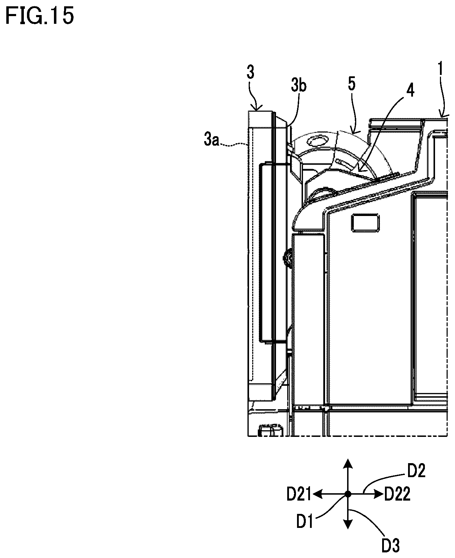

Fig. 15 is a side view of a peripheral portion of the display unit in the image forming apparatus according to the embodiment;
Fig. 16 is a cross-sectional view of the display unit, the support mechanism, and a cable cover in the image forming apparatus according to the embodiment;
Fig. 17 is an exploded side view of the cable cover in the image forming apparatus according to the embodiment; and
Fig. 18 is a perspective view of a peripheral portion of an attachment opening of a main body in the image forming apparatus according to the embodiment.

### DETAILED DESCRIPTION

Hereinafter, an embodiment of the present disclosure will be described with reference to the drawings. It is noted that the following embodiment is an example of embodying the present disclosure and does not limit the technical scope of the present disclosure.

### [Configuration of image forming apparatus 10]

An image forming apparatus 10 according to the embodiment is capable of executing print processing for forming an image on a sheet 9.

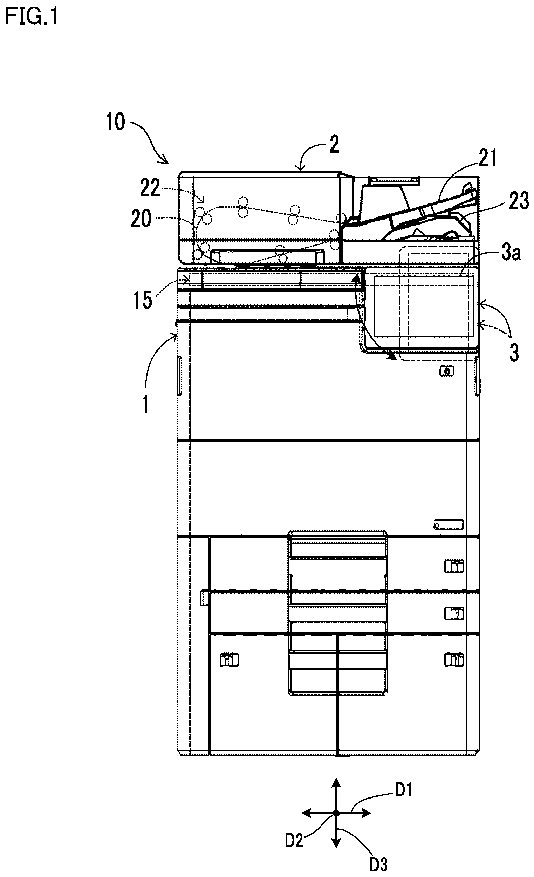

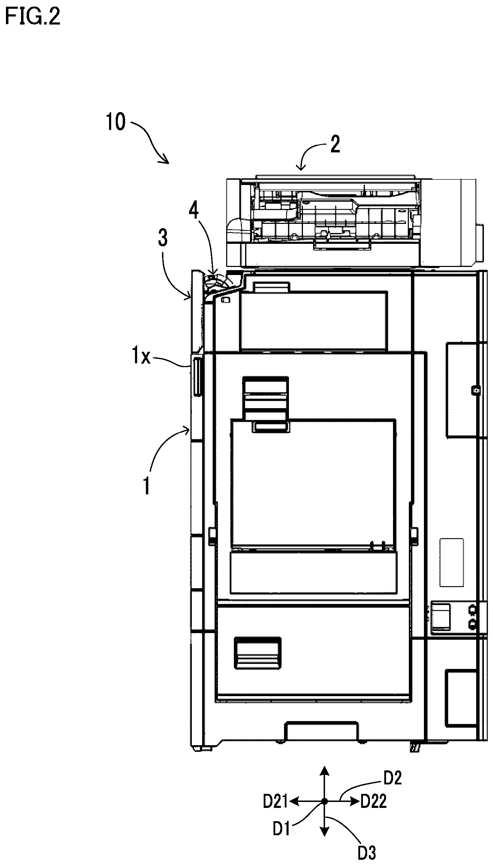

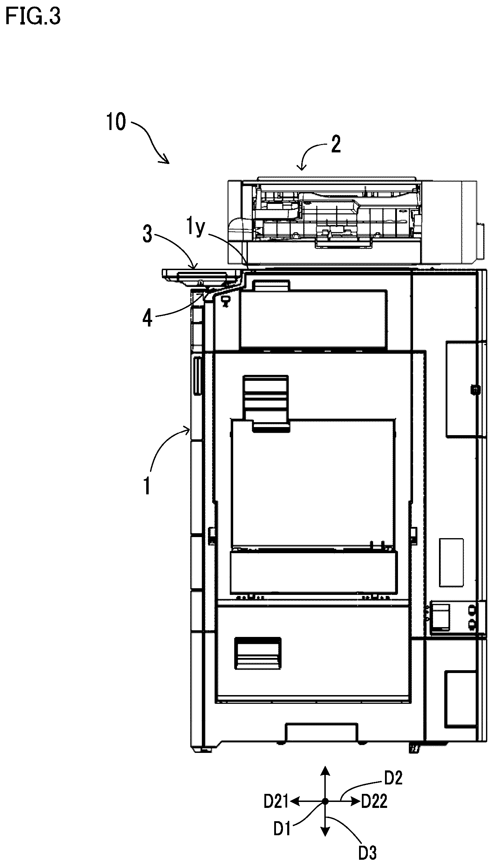

The image forming apparatus 10 includes a display unit 3 capable of displaying various types of information (see Fig. 1 to Fig. 3). The image forming apparatus 10 further includes a support mechanism 4 which supports the display unit 3 (see Fig. 2 and Fig. 3).

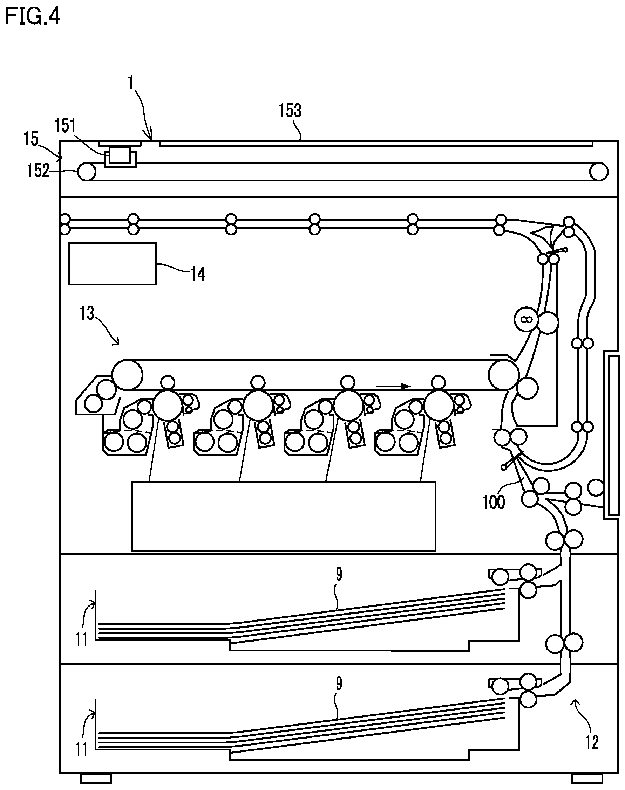

The image forming apparatus 10 includes a main body 1, a document sheet conveying device 2, and the display unit 3. The main body 1 includes a housing which incorporates therein main portions of the image forming apparatus 10, and members attached to the housing. The main body 1 incorporates therein a sheet storing portion 11, a sheet conveying device 12, a printing device 13, and a control device 14 (see Fig. 4). In the present embodiment, the main body 1 also incorporates therein an image reading device 15.

The document sheet conveying device 2 is coupled to an upper portion of the main body 1 (see Fig. 1 to Fig. 3). The document sheet conveying device 2 is supported so as to be movable between a closing position that covers a specific area on an upper surface of the main body 1 and an opening position that opens the specific area. The display unit 3 is coupled to a portion of the upper portion of the main body 1 that is provided along a front surface of the main body 1 by the support mechanism 4 (see Fig. 2 and Fig. 3).

The document sheet conveying device 2 includes a document sheet supply tray 21, a document sheet conveying mechanism 22, and a document sheet discharge tray 23 (see Fig. 1). The document sheet conveying mechanism 22 feeds a document sheet on the document sheet supply tray 21 to a conveying path 20, and further discharges the document sheet from the conveying path 20 onto the document sheet discharge tray 23.

The sheet storing portion 11 is capable of storing a plurality of sheets 9. The sheet conveying device 12 sends out the sheets 9 one by one from the sheet storing portion 11 to a conveying path 100, and further conveys the sheets 9 along the conveying path 100. Further, the sheet conveying device 12 sends out the sheet 9 from the conveying path 100 to a subsequent device (not shown).

The printing device 13 executes the print processing on the sheet 9 conveyed along the conveying path 100. In the example shown in Fig. 4, the printing device 13 executes the print processing using electrophotography.

It is noted that the printing device 13 may be a device that executes the print processing using other methods such as an inkjet method.

The image reading device 15 includes an image sensor 151 which reads an image from the document sheet conveyed by the document sheet conveying device 2 (see Fig. 4). The image reading device 15 further includes a scanning mechanism 152 and a platen glass 153. The scanning mechanism 152 causes the image sensor 151 to move along a lower surface of the platen glass 153. Thus, the image sensor 151 can read an image from the document sheet on the platen glass 153.

The control device 14 controls the document sheet conveying device 2, the image reading device 15, the sheet conveying device 12, the printing device 13, and the display unit 3. The control device 14 includes a processor, a secondary storage device, a signal interface, a communication device, and the like (all of which are not shown).

The processor controls each device by executing computer programs stored in the secondary storage device. The processor acquires detection results of various sensors via the signal interface. In addition, the processor outputs control signals to a device to be controlled via the signal interface.

The processor receives a print request from another device via the communication device. Further, the processor causes the sheet conveying device 12 and the printing device 13 to execute the print processing corresponding to the print request.

The display unit 3 is capable of displaying various types of information and images. For example, the display unit 3 is a touch panel unit including a panel display device and a touch panel. The panel display device is a liquid crystal display panel, an organic electroluminescence display, or the like.

The display unit 3 includes a rectangular screen 3a and has a rectangular outline corresponding to an outer shape of the screen 3a (see Fig. 1). Shapes of the screen 3a and the outline of the display unit 3 may be a rectangle in which some or all of the four corners are chamfered.

The control device 14 causes the display unit 3 to display various menu screens, print target images, or the like. Fig. 1 shows a state where the display unit 3 is supported by the support mechanism 4 in an attitude in which the screen 3a becomes horizontally long.

In the image forming apparatus 10, a user may wish to display the entire print target image that is vertically long on the display unit 3.

For example, the print target image may be reduced such that a length of the print target image in a longitudinal direction fits within a length of a short side of the screen 3a to be displayed on the screen 3a. In this case, the displayed image becomes too small, which lowers visibility of the print target image.

Meanwhile, a situation where the print target image is displayed on the screen 3a while being rotated 90 degrees is also conceivable. In this case, the displayed image is displayed in a direction different from the original direction, and thus the visibility of the print target image is lowered.

As will be described later, the support mechanism 4 supports the display unit 3 in a state where an orientation of the display unit 3 can be changed. Thus, it becomes possible to display the print target image on the rectangular screen 3a with high visibility, regardless of which of the vertically-long image and the horizontally-long image the print target image is.

### [Configuration of support mechanism 4]

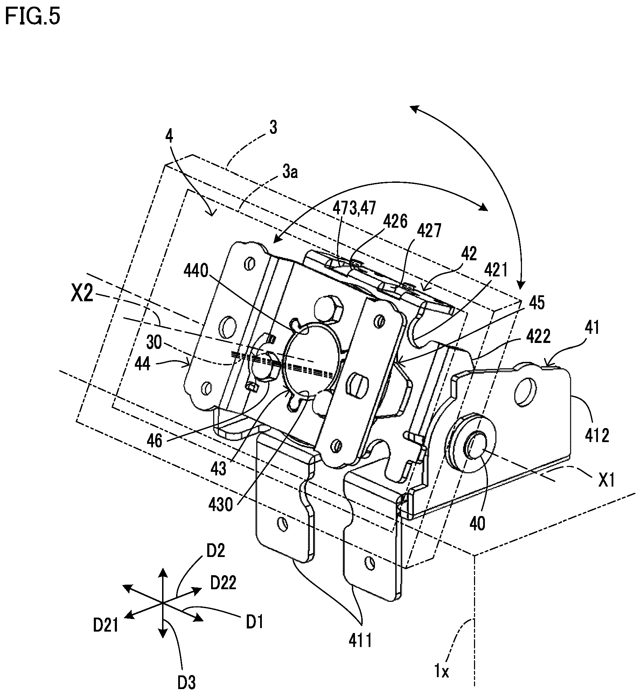

Hereinafter, a configuration of the support mechanism 4 will be described with reference to Fig. 5 to Fig. 14. The support mechanism 4 is fixed to the main body 1 and supports the display unit 3.

In the figures, a width direction D1 is a left-right direction of the main body 1, a depth direction D2 is a front-rear direction of the main body 1, and an up-down direction D3 is an up-down direction of the main body 1. In addition, a forward direction D21 is a direction that is directed from a back surface of the main body 1 toward a front surface, and a rearward direction D22 is a direction that is directed from the front surface of the main body 1 toward the back surface.

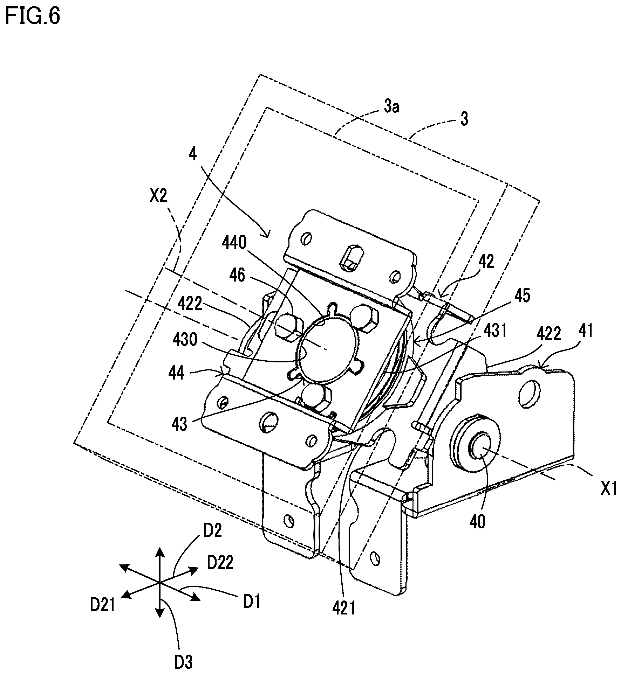

The support mechanism 4 includes a base member 41, a support shaft 40, a swing member 42, a rotation member 43, a unit support member 44, and a plurality of bolts 46 (see Fig. 5 and Fig. 6).

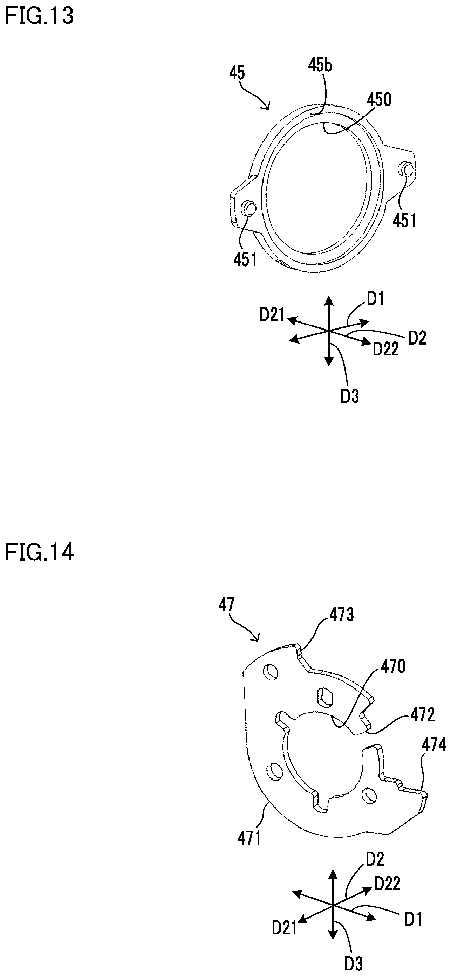

The support mechanism 4 further includes an intervention member 45 and one or more leaf springs 48 (see Fig. 5 to Fig. 8). The support mechanism 4 further includes a reinforcement member 47 (see Fig. 5 and Fig. 14). The leaf spring 48 is an example of an elastic member.

In the present embodiment, the rotation member 43, the unit support member 44, the intervention member 45, the plurality of bolts 46, and the reinforcement member 47 are an example of a unit coupling mechanism which couples the swing member 42 and the back surface 3b of the display unit 3.

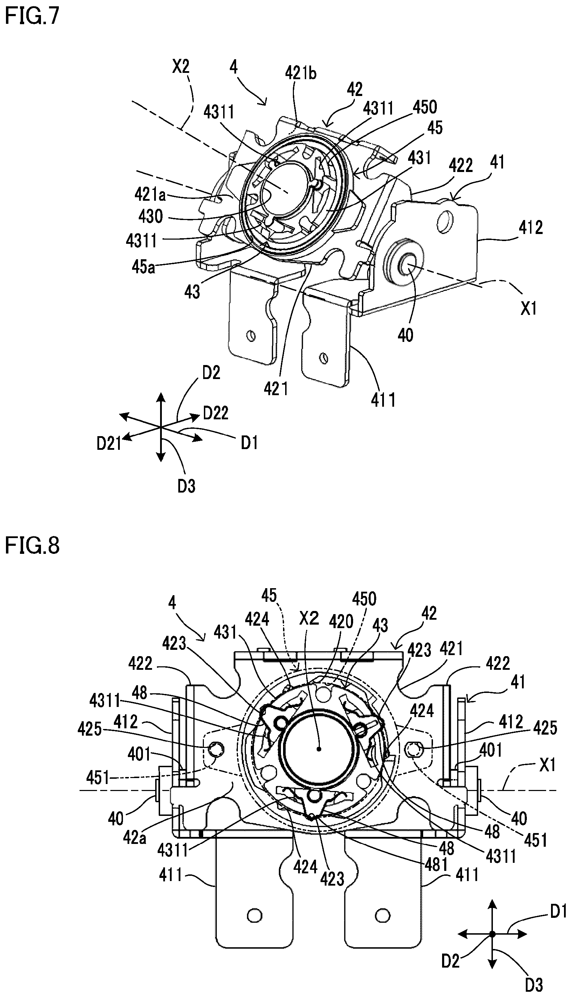

Fig. 5 and Fig. 6 are each a perspective view of the support mechanism 4. Fig. 7 shows the support mechanism 4 from which the unit support member 44, the plurality of bolts 46, and the leaf springs 48 have been removed. Fig. 8 is a front view of the support mechanism 4 from which the unit support member 44 has been removed.

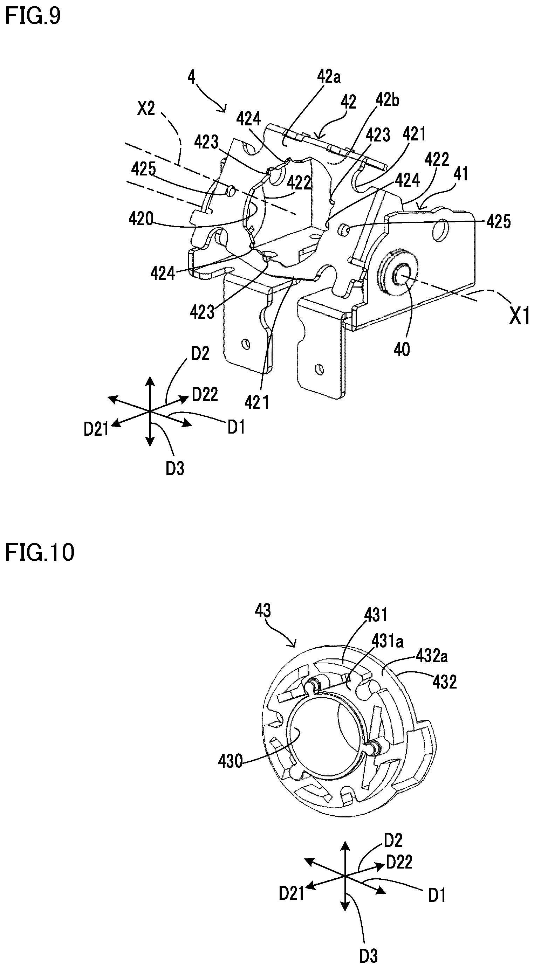

Fig. 9 is a perspective view of the base member 41 and the swing member 42 in the support mechanism 4. Fig. 9 shows the support mechanism 4 from which the unit support member 44, the rotation member 43, the plurality of bolts 46, and the leaf springs 48 have been removed.

The base member 41 is fixed to a portion of the upper portion of the main body 1 that is provided along the front surface of the main body 1 (see Fig. 5). In the present embodiment, the base member 41 is constituted of a pair of members arranged side by side in the width direction D1.

The base member 41 includes to-be-fixed portions 411 and a pair of vertical plate portions 412 formed to extend upwardly from the to-be-fixed portions 411. The to-be-fixed portions 411 are fixed to the main body 1 by screws or bolts (not shown). Thus, the base member 41 is fixed to the main body 1.

The support shaft 40 is supported by the pair of vertical plate portions 412 while being provided along the width direction D1. In the present embodiment, the support shaft 40 is constituted of a pair of shaft members arranged in a straight line along the width direction D1.

The swing member 42 is supported by the support shaft 40 while being rotatable about a first axis line X1. The first axis line X1 is a straight line that passes through a center of the support shaft 40. In other words, the first axis line X1 is a straight line provided along the width direction D1.

The swing member 42 includes a front plate portion 421, a pair of to-be-supported portions 422, and a first opening 420 (see Fig. 6 and Fig. 9). The front plate portion 421 is formed in a plate shape parallel to the first axis line X1. The first opening 420 is formed to penetrate the front plate portion 421 in a thickness direction. The first opening 420 is an example of a main opening.

The thickness direction of the front plate portion 421 is also a thickness direction of the display unit 3 to be attached to the unit support member 44. In descriptions below, the thickness direction of the front plate portion 421 and the display unit 3 will be referred to as a unit thickness direction.

The unit thickness direction is a direction that intersects with the width direction D1. The front plate portion 421 is formed in a plate shape orthogonal to the unit thickness direction. It is noted that the width direction D1 is an example of a first direction, and the unit thickness direction is an example of a second direction intersecting with the first direction.

The pair of to-be-supported portions 422 are formed to extend from the front plate portion 421 to positions at which the pair of to-be-supported portions 422 intersect with the first axis line X1. The pair of to-be-supported portions 422 are rotatably supported by the support shaft 40. Thus, the swing member 42 can rotate about the first axis line X1.

The rotation member 43 is supported by the front plate portion 421 of the swing member 42 while being rotatable about a second axis line X2 (see Fig. 5 to Fig. 7). The second axis line X2 is a straight line extending along the unit thickness direction.

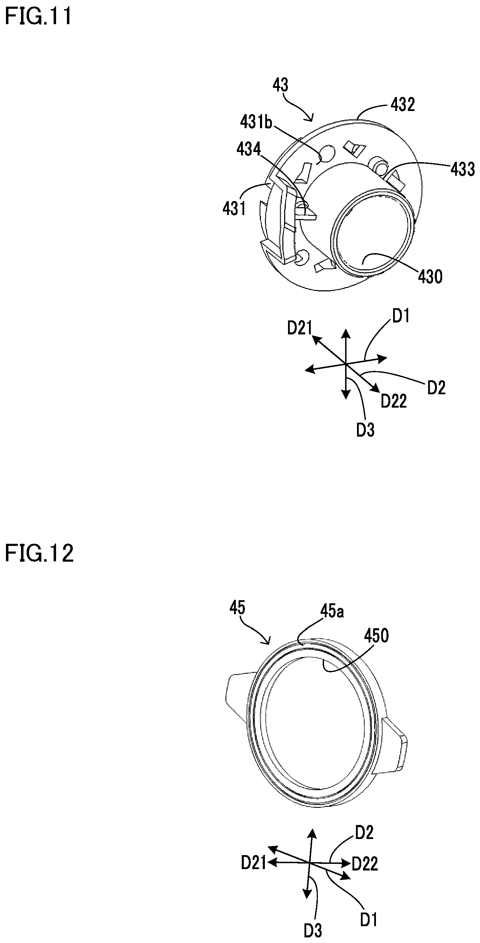

The rotation member 43 includes an insertion portion 431 and a flange portion 432 (see Fig. 10 and Fig. 11). The insertion portion 431 is a portion that is inserted into the first opening 420 of the front plate portion 421. The flange portion 432 is formed to protrude from an outer edge of the insertion portion 431 along a back surface 421b of the front plate portion 421 (see Fig. 9 to Fig. 11).

The flange portion 432 comes into contact with the back surface 421b of the front plate portion 421. The flange portion 432 restricts the movement of the rotation member 43 toward the front surface 421a side of the front plate portion 421.

The insertion portion 431 includes a third opening 430 that penetrates the insertion portion 431 in the unit thickness direction. Further, the insertion portion 431 includes one or more spring retention portions 4311 that retain the one or more leaf springs 48 (see Fig. 7 and Fig. 8). The third opening 430 is an example of an inner opening that penetrates in the unit thickness direction on an inner side of the first opening 420.

In the present embodiment, the support mechanism 4 includes three leaf springs 48, and the insertion portion 431 includes three spring retention portions 4311 (see Fig. 8). The leaf springs 48 are respectively retained by the spring retention portions 4311. Each of the leaf springs 48 includes a curved portion that protrudes outwardly from an outer edge of the insertion portion 431.

The intervention member 45 is a member that is sandwiched between the front plate portion 421 of the swing member 42 and the unit support member 44 (see Fig. 5, Fig. 6, Fig. 12, and Fig. 13). A back surface 45b of the intervention member 45 is in contact with the front surface 421a of the front plate portion 421, and a front surface 45a of the intervention member 45 is in contact with the unit support member 44 (see Fig. 7, Fig. 12, and Fig. 13).

The intervention member 45 includes a second opening 450 penetrating in the unit thickness direction. The second opening 450 communicates with the first opening 420 of the insertion portion 431 in the unit thickness direction (see Fig. 8). In Fig. 8 , the intervention member 45 is illustrated in virtual lines (dash-dot-dot lines).

The intervention member 45 includes a pair of convex portions 451 that protrude toward the front plate portion 421 side (see Fig. 8 and Fig. 13). Meanwhile, a pair of latch holes 425 are formed in the front plate portion 421 (see Fig. 7 and Fig. 8). The pair of convex portions 451 are respectively inserted into the pair of latch holes 425 (see Fig. 8). The pair of latch holes 425 latch the pair of convex portions 451 to thus prevent the intervention member 45 from rotating in conjunction with the rotation of the rotation member 43.

The insertion portion 431 of the rotation member 43 is inserted into the first opening 420 of the front plate portion 421 and the second opening 450 of the intervention member 45 (see Fig. 7 and Fig. 8).

The unit support member 44 is coupled to the rotation member 43 by the plurality of bolts 46 (see Fig. 5 and Fig. 6). Thus, the unit support member 44 can rotate about the second axis line X2 together with the rotation member 43.

The display unit 3 is fixed to the unit support member 44 by screws, bolts, or the like (not shown) (see Fig. 5 and Fig. 6). In Fig. 5 and Fig. 6, the display unit 3 is illustrated in virtual lines.

Accordingly, the display unit 3 is, together with the unit support member 44, the rotation member 43, and the swing member 42, rotatable about the first axis line X1. Thus, a so-called tilt function is realized. The display unit 3 is rotatable between a forward attitude in which the screen 3a faces toward the front of the main body 1 and an upward attitude in which the screen 3a faces upward. The first axis line X1 is an example of a tilt axis line.

Fig. 1 and Fig. 2 each show the state where the display unit 3 is in the forward attitude. Fig. 3 shows the state where the display unit 3 is in the upward attitude. The display unit 3 is supported by the support mechanism 4 while being rotatable between the forward attitude and the upward attitude.

In the present embodiment, the forward attitude of the display unit 3 is an attitude in which the screen 3a faces the forward direction D21 along a horizontal direction (see Fig. 1 and Fig. 2). On the other hand, the upward attitude of the display unit 3 is an attitude in which the screen 3a faces an upward vertical direction (see Fig. 3). In other words, the display unit 3 is rotatable within a range of 90 degrees about the first axis line X1.

In the example shown in Fig. 2, when the display unit 3 is in the forward attitude, the front surface of the display unit 3 is arranged along an extension line of a surface of a front exterior panel 1x of the main body 1.

In the example shown in Fig. 3, when the display unit 3 is in the upward attitude, the front surface of the display unit 3 is arranged along an extension line of a surface of an upper exterior panel 1y of the main body 1.

Furthermore, the display unit 3 is, together with the unit support member 44 and the rotation member 43, rotatable about the second axis line X2. The display unit 3 is rotatable between a horizontally-long attitude in which the screen 3a becomes horizontally long and a vertically-long attitude in which the screen 3a becomes vertically long (see Fig. 5 and Fig. 6). Thus, a so-called pivot function is realized. The second axis line X2 is an example of a pivot axis line.

The virtual lines in Fig. 5, and Fig. 1 show the display unit 3 in the horizontally-long attitude. The virtual lines in Fig. 1 and Fig. 6 show the display unit 3 in the vertically-long attitude. The display unit 3 is rotatable within the range of 90 degrees about the second axis line X2.

As described above, the display unit 3 is rotatable between the horizontally-long attitude and the vertically-long attitude. Therefore, the user can change the orientation of the display unit 3 according to an orientation of an image to be displayed on the display unit 3.

When causing the display unit 3 to display an entire print target image, the control device 14 causes the display unit 3 to display the print target image in an orientation in which long sides of the print target image are provided along long sides of the screen 3a.

When the print target image is a horizontally-long image, the user can rotate the display unit 3 so that the display unit 3 takes the horizontally-long attitude. On the other hand, when the print target image is a vertically-long image, the user can rotate the display unit 3 so that the display unit 3 takes the vertically-long attitude. Thus, visibility of the print target image is improved.

Furthermore, the user can rotate the display unit 3 between the forward attitude and the upward attitude according to his/her height. Thus, visibility of various images such as the print target image displayed on the display unit 3 is improved.

In the present embodiment, the base member 41, the swing member 42, and the unit support member 44 are each a metal member formed of iron, aluminum, or the like. On the other hand, the rotation member 43 and the intervention member 45 are each a synthetic resin member.

When the display unit 3 rotates about the second axis line X2, the unit support member 44 is rubbed against the front surface 45a of the intervention member 45, and the flange portion 432 of the rotation member 43 is rubbed against the back surface 421b of the front plate portion 421.

In other words, when the display unit 3 rotates about the second axis line X2, the metal member is rubbed against the synthetic resin member, but the metal members are not rubbed against each other. Thus, the rotation member 43 rotates smoothly.

Further, a pair of annular members 401 are respectively interposed between the pair of vertical plate portions 412 of the base member 41 and the pair of to-be-supported portions 422 of the swing member 42 (see Fig. 8). The pair of annular members 401 are each a synthetic resin member.

The support shaft 40 penetrates through the pair of annular members 401. Thus, the pair of annular members 401 are supported by the support shaft 40.

When the display unit 3 rotates about the first axis line X1, the pair of to-be-supported portions 422 are rubbed against the pair of annular members 401. At this time, the pair of to-be-supported portions 422 are not rubbed against the pair of vertical plate portions 412.

In other words, when the display unit 3 rotates about the first axis line X1, the metal member is rubbed against the synthetic resin member, but the metal members are not rubbed against each other. Thus, the swing member 42 rotates smoothly.

The reinforcement member 47 is arranged along the back surface 431b of the insertion portion 431 (see Fig. 11 and Fig. 14). The rotation member 43 further includes a cylindrical portion 433 and an engagement portion 434 that protrude from the back surface 431b of the insertion portion 431 (see Fig. 11).

The reinforcement member 47 is a plate-type metal member. The reinforcement member 47 includes a coupling portion 471 and an engagement portion 472 (see Fig. 14). The coupling portion 471 is formed with an opening 470 into which the cylindrical portion 433 of the rotation member 43 is inserted.

The unit support member 44 is coupled to the insertion portion 431 of the rotation member 43 and the coupling portion 471 of the reinforcement member 47 by the plurality of bolts 46 (see Fig. 5 and Fig. 6).

More specifically, the unit support member 44 and the coupling portion 471 of the reinforcement member 47 are coupled by the plurality of bolts 46, and the insertion portion 431 of the rotation member 43 is sandwiched between the unit support member 44 and the coupling portion 471.

Accordingly, the unit support member 44 is rotatable about the second axis line X2 together with the rotation member 43 and the reinforcement member 47.

The engagement portion 472 of the reinforcement member 47 engages with the engagement portion 434 of the rotation member 43. The engagement portion 472 and the engagement portion 434 prevent the rotation member 43 and the reinforcement member 47 from rattling in the rotation direction.

By coupling the unit support member 44 and the reinforcement member 47 each formed of metal, the unit support member 44, the rotation member 43, and the reinforcement member 47 are coupled firmly.

The insertion portion 431 of the rotation member 43 includes the third opening 430 that penetrates in the unit thickness direction (see Fig. 5 to Fig. 7, and Fig. 11). The third opening 430 is also an opening of the cylindrical portion 433 (see Fig. 11).

Similarly, the unit support member 44 includes a fourth opening 440 that penetrates in the unit thickness direction (see Fig. 5 and Fig. 6). The fourth opening 440 communicates with the third opening 430 in the unit thickness direction.

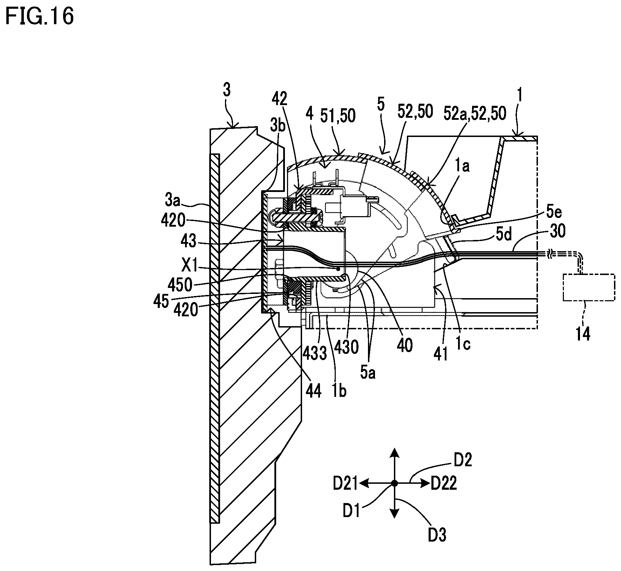

The image forming apparatus 10 further includes a cable 30 having one end connected to the display unit 3 (see Fig. 5 and Fig. 16). The cable 30 is wired from the back surface 3b of the display unit 3 to the control device 14 in the main body 1 via insides of the fourth opening 440 and the third opening 430 (see Fig. 5). Thus, the cable 30 can be wired in a short path. In addition, the insertion portion 431 and cylindrical portion 433 of the rotation member 43 serve to protect the cable 30.

The front plate portion 421 of the swing member 42 includes one or more first fitting portions 423 and one or more second fitting portions 424 (see Fig. 8 and Fig. 9). In the present embodiment, the first fitting portion 423 and the second fitting portion 424 are each a concave portion formed at an edge of the first opening 420.

In the present embodiment, the front plate portion 421 includes three first fitting portions 423 and three second fitting portions 424 that correspond to the three leaf springs 48.

The first fitting portions 423 fit with the leaf springs 48 when the display unit 3 is in the horizontally-long attitude. Fig. 8 shows a state where the first fitting portions 423 are engaged with the curved portions of the leaf springs 48. The fitting of the first fitting portions 423 with the leaf springs 48 is released when the display unit 3 rotates from the horizontally-long attitude to the vertically-long attitude.

The second fitting portions 424 fit with the curved portions of the leaf springs 48 when the display unit 3 is in the vertically-long attitude. The fitting of the second fitting portions 424 with the leaf springs 48 is released when the display unit 3 rotates from the vertically-long attitude to the horizontally-long attitude.

The leaf springs 48, the first fitting portions 423, and the second fitting portions 424 give a sense of a click to a hand of the user when rotating the display unit 3.

That is, when the display unit 3 rotates and reaches a position of the horizontally-long attitude, the leaf springs 48 and the first fitting portions 423 give a sense of a click to the hand of the user. When the display unit 3 rotates and reaches a position of the vertically-long attitude, the leaf springs 48 and the second fitting portions 424 give a sense of a click to the hand of the user.

By the sense of a click given to the hand of the user, the user stops the operation of rotating the display unit 3. Thus, a situation where an excessive rotational force is applied to the display unit 3 is avoided.

The reinforcement member 47 further includes a first convex portion 473 and a second convex portion 474 that protrude outwardly from the outer edge of the coupling portion 471 (see Fig. 14). Meanwhile, the swing member 42 includes a first latch portion 426 and a second latch portion 427 (see Fig. 5).

The first latch portion 426 latches the first convex portion 473 to latch the reinforcement member 47 at a position when the display unit 3 is in the horizontally-long attitude (see Fig. 5). The second latch portion 427 latches the second convex portion 474 to latch the reinforcement member 47 at a position when the display unit 3 is in the vertically-long attitude.

The reinforcement member 47 is an example of a metal member coupled to the rotation member 43. It is noted that the first latch portion 426 and the second latch portion 427 may alternatively latch the unit support member 44. The unit support member 44 is also an example of the metal member coupled to the rotation member 43.

The first latch portion 426, the second latch portion 427, the first convex portion 473, and the second convex portion 474 prevent an excessive force from being applied to the rotation member 43 formed of a synthetic resin.

Incidentally, the cable 30 connected to the display unit 3 needs to be appropriately protected in a wiring path extending from the back surface 3b of the display unit 3 to the inside of the main body 1.

As shown in Fig. 16, the image forming apparatus 10 further includes a cable cover 5 which covers a part of the cable 30. The cable cover 5 protects the portion of the cable 30 ranging from the support mechanism 4 to the main body 1.

When the support mechanism 4 supports the display unit 3 rotatably about the first axis line X1, a range to be covered by the cable cover 5 changes. Therefore, the cable cover 5 is required to be deformed in accordance with the rotation of the display unit 3.

Meanwhile, there are cases where a flexible member such as a rubber pipe or a bellows pipe cannot be used as the cable cover 5 due to required specifications such as heat resistance.

In the present embodiment, the cable cover 5 has a configuration for appropriately protecting the cable 30 without using a flexible member. Hereinafter, the cable cover 5 will be described.

### [Configuration of cable cover 5]

The cable cover 5 covers a part of the cable. The cable 30 is wired from the back surface 3b of the display unit 3 into the main body 1 via the inside of the third opening 430 of the rotation member 43 and an inside of the cable cover 5 (see Fig. 16 ).

In the present embodiment, a part of the inside of the third opening 430 of the rotation member 43 includes the inside of the first opening 420 of the swing member 42 and the inside of the second opening 450 of the intervention member 45.

The cable cover 5 covers the portion of the cable 30 ranging from the swing member 42 to the main body 1 (see Fig. 16).

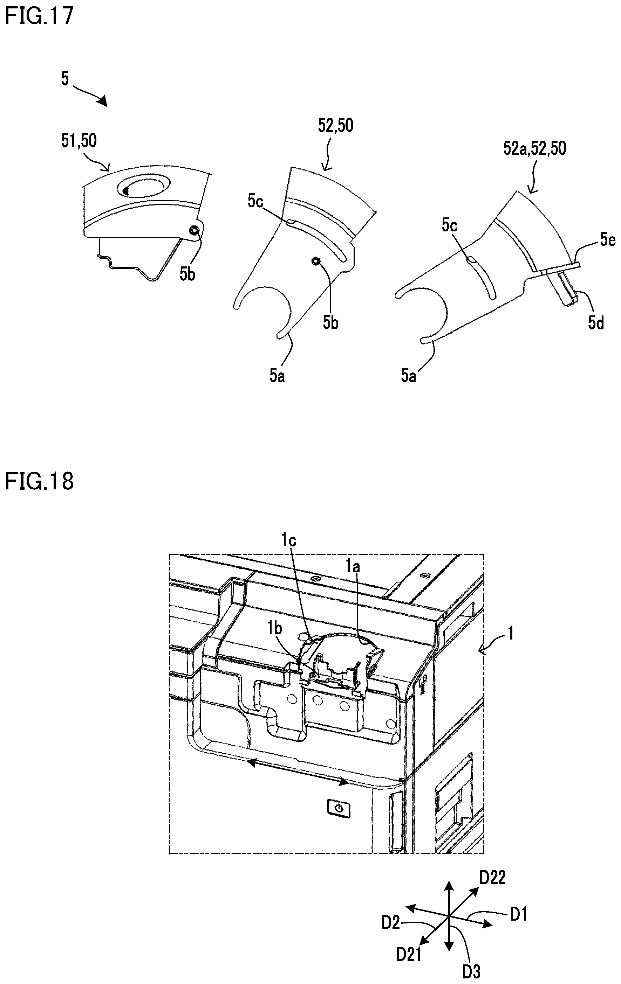

The cable cover 5 includes a plurality of element cover members 50 (see Fig. 16 and Fig. 17). For example, each of the element cover members 50 is a member formed of a flame-retardant synthetic resin such as polyvinyl chloride, fluorine resin, or polyphenylene sulfide.

The plurality of element cover members 50 are arranged while sequentially overlapping each other and are coupled while being capable of changing an overlapping state thereof.

The plurality of element cover members 50 include a first element cover member 51 and one or a plurality of second element cover members 52. In the present embodiment, the cable cover 5 includes three element cover members 50, and the three element cover members 50 include two second element cover members 52.

The first element cover member 51 is coupled to the swing member 42. Thus, when the swing member 42 rotates, the first element cover member 51 rotates together with the swing member 42 about the first axis line X1.

Each of the second element cover members 52 includes a to-be-supported portion 5a that is rotatably supported by the support shaft 40. In the example shown in Fig. 17, the to-be-supported portion 5a includes a concave portion into which the support shaft 40 is fit.

Each of the second element cover members 52 is supported by the support shaft 40 so as to be rotatable about the first axis line X1.

One of two adjacent members out of the three element cover members 50 includes a protrusion portion 5b, and the other includes a fitting hole 5c having an arc shape. In the example shown in Fig. 17, one of the two element cover members 52 that is coupled next to the first element cover member 51 and the first element cover member 51 include the protrusion portion 5b. In addition, each of the two element cover members 52 includes the fitting hole 5c.

By the engagement of the protrusion portions 5b and the fitting hole 5c, the three element cover members 50 are coupled while being capable of changing the overlapping state thereof.

The to-be-supported portions 5a are supported by the support shaft 40 so that the fitting hole 5c is arranged along an arc that centers on the first axis line X1. The protrusion portions 5b fit into the fitting hole 5c and are slidable along the fitting hole 5c.

Accordingly, by the change of the overlapping state of the three element cover members 50, the cable cover 5 can expand and contract along the arc that centers on the first axis line X1.

Specifically, when the swing member 42 rotates, the first element cover member 51 rotates together with the swing member 42 about the first axis line X1. At that time, the three element cover members 50 partially rotate in conjunction with the rotation of the swing member 42, and the overlapping state of the three element cover members 50 changes. Thus, the cable cover 5 expands and contracts in accordance with the rotation of the swing member 42.

When the display unit 3 rotates from the forward attitude to the upward attitude, the cable cover 5 contracts along the arc that centers on the first axis line X1. On the other hand, when the display unit 3 rotates from the upward attitude to the forward attitude, the cable cover 5 expands along the arc that centers on the first axis line X1.

In the present embodiment, the main body 1 includes an attachment seat 1b, a cover support portion 1c, and an attachment opening 1a (see Fig. 18). The attachment seat 1b is a portion to which the base member 41 of the support mechanism 4 is fixed. The attachment opening 1a is an opening that communicates with the attachment seat 1b and the cover support portion 1c (see Fig. 18).

The cover support portion 1c is a portion that supports a terminal cover member 52a which is one of the plurality of element cover members 50 (see Fig. 16). The terminal cover member 52a is one of the three element cover members 50 that is connected at an end on the main body 1 side. In the present embodiment, the terminal cover member 52a is one of the two second element cover members 52.

The terminal cover member 52a includes a leg portion 5d formed to protrude downwardly (see Fig. 16). The leg portion 5d abuts against the cover support portion 1c. A portion of the terminal cover member 52a including the leg portion 5d is inserted into the attachment opening 1a of the main body 1. Thus, the portion of the terminal cover member 52a including the leg portion 5d is covered by an edge portion of the attachment opening 1a in the main body 1.

The terminal cover member 52a further includes a to-be-latched portion 5e that protrudes along an inner surface of the edge portion of the attachment opening 1a in the main body 1 (see Fig. 16 and Fig. 17). By the to-be-latched portion 5e being latched by the edge portion of the attachment opening 1a, the terminal cover member 52a is prevented from slipping out entirely to the outside of the attachment opening 1a.

The leg portion 5d of the terminal cover member 52a forms a wiring space from inside the cable cover 5 toward the rear direction D22 of the main body 1. The cable 30 is wired from inside the cable cover 5 to the control device 14 in the main body 1 via the side of the leg portion 5d (see Fig. 16).

By adopting the cable cover 5, the cable 30 can be appropriately protected without using a flexible member such as a rubber pipe or a bellows pipe.

### [Notes of disclosure]

Hereinafter, a general outline of the disclosure extracted from the embodiment described above will be noted. It is noted that the respective configurations and processing functions described in the notes below can be sorted and arbitrarily combined as appropriate.

### <Note 1 >

An image forming apparatus, including:
a main body which incorporates therein a printing device which forms an image on a sheet;
a display unit;
a support mechanism which is fixed to the main body and supports the display unit;
a cable having one end connected to the display unit; and
a cable cover which covers a part of the cable, in which
the support mechanism includes
a base member fixed to the main body,
a support shaft supported by the base member while being provided along a first direction that is a left-right direction of the main body,
a swing member which is supported by the support shaft while being rotatable about a tilt axis line that passes through a center of the support shaft, and is formed with a main opening that penetrates in a second direction that is a thickness direction of the display unit, and
a unit coupling mechanism which couples the swing member and a back surface of the display unit,
the cable is wired from the back surface of the display unit into the main body via an inside of the main opening,
the cable cover covers a portion of the cable ranging from the swing member to the main body,
the cable cover includes a plurality of element cover members which are arranged while sequentially overlapping each other and are coupled while being capable of changing an overlapping state thereof,
the plurality of element cover members include
a first element cover member coupled to the swing member, and
one or a plurality of second element cover members supported by the support shaft while being rotatable about the tilt axis line, and
by the plurality of element cover members partially rotating in conjunction with a rotation of the swing member and the overlapping state of the plurality of element cover members thus being changed, the cable cover is capable of expanding and contracting in accordance with the rotation of the swing member.

### <Note 2>

The image forming apparatus according to note 1, in which
the main body includes
an attachment seat to which the base member is fixed,
a cover support portion which supports a terminal cover member that is one of the plurality of element cover members coupled at an end on a side of the main body, and
an attachment opening which is an opening that communicates with the attachment seat and the cover support portion,
the terminal cover member includes a leg portion which is formed to protrude downwardly and abuts against the cover support portion, and
a part of the terminal cover member including the leg portion is inserted into the attachment opening of the main body.

### <Note 3>

The image forming apparatus according to note 2, in which the terminal cover member includes a to-be-latched portion protruding along an inner surface of an edge portion of the attachment opening in the main body.

### <Note 4>

The image forming apparatus according to any one of notes 1 to 3, in which
the display unit includes a rectangular screen,
the unit coupling mechanism includes
a rotation member which includes an insertion portion inserted into the main opening and an inner opening that is an opening penetrating the insertion portion in the second direction, and is supported by the swing member while being rotatable about a pivot axis line provided along the second direction, and
a unit support member to which the display unit is fixed, the unit support member being coupled to the rotation member and being rotatable together with the rotation member, and
the cable is wired from the back surface of the display unit into the main body via an inside of the inner opening and an inside of the cable cover.

### <Note 5>

The image forming apparatus according to note 4, in which the display unit is supported by the support mechanism while being rotatable between a forward attitude in which the screen faces toward a front of the main body along a horizontal direction and an upward attitude in which the screen faces an upward vertical direction.

It is to be understood that the embodiments herein are illustrative and not restrictive, since the scope of the disclosure is defined by the appended claims rather than by the description preceding them, and all changes that fall within metes and bounds of the claims, or equivalence of such metes and bounds thereof are therefore intended to be embraced by the claims.

## Claims

1. An image forming apparatus (10), comprising:
a main body (1) which incorporates therein a printing device (13) which forms an image on a sheet;
a display unit (3);
a support mechanism (4) which is fixed to the main body (1) and supports the display unit (3);
a cable (30) having one end connected to the display unit (3); and
a cable cover (5) which covers a part of the cable (30), wherein
the support mechanism (4) includes
a base member (41) fixed to the main body (1),
a support shaft (40) supported by the base member (41) while being provided along a first direction that is a left-right direction of the main body (1),
a swing member (42) which is supported by the support shaft (40) while being rotatable about a tilt axis line that passes through a center of the support shaft (40), and is formed with a main opening (420) that penetrates in a second direction that is a thickness direction of the display unit (3), and
a unit coupling mechanism (43 to 47) which couples the swing member (42) and a back surface of the display unit (3),
the cable (30) is wired from the back surface of the display unit (3) into the main body (1) via an inside of the main opening (420),
the cable cover (5) covers a portion of the cable (30) ranging from the swing member (42) to the main body (1),
the cable cover (5) includes a plurality of element cover members (50) which are arranged while sequentially overlapping each other and are coupled while being capable of changing an overlapping state thereof,
the plurality of element cover members (50) include
a first element cover member (51) coupled to the swing member (42), and
one or a plurality of second element cover members (52) supported by the support shaft (40) while being rotatable about the tilt axis line, and
by the plurality of element cover members (50) partially rotating in conjunction with a rotation of the swing member (42) and the overlapping state of the plurality of element cover members (50) thus being changed, the cable cover (5) is capable of expanding and contracting in accordance with the rotation of the swing member (42).

2. The image forming apparatus (10) according to claim 1, wherein
the main body (1) includes
an attachment seat (1b) to which the base member (41) is fixed,
a cover support portion (1c) which supports a terminal cover member (52a) that is one of the plurality of element cover members (50) coupled at an end on a side of the main body (1), and
an attachment opening (1a) which is an opening that communicates with the attachment seat (1b) and the cover support portion (1c),
the terminal cover member (52a) includes a leg portion (5d) which is formed to protrude downwardly and abuts against the cover support portion (1c), and
a part of the terminal cover member (52a) including the leg portion (5d) is inserted into the attachment opening (1a) of the main body (1).

3. The image forming apparatus (10) according to claim 2, wherein
the terminal cover member (52a) includes a to-be-latched portion (5e) protruding along an inner surface of an edge portion of the attachment opening (1a) in the main body (1).

4. The image forming apparatus (10) according to claim 1 or 2, wherein
the display unit (3) includes a rectangular screen,
the unit coupling mechanism (43 to 47) includes
a rotation member (43) which includes an insertion portion (431) inserted into the main opening (420) and an inner opening (430) that is an opening penetrating the insertion portion (431) in the second direction, and is supported by the swing member (42) while being rotatable about a pivot axis line provided along the second direction, and
a unit support member (44) to which the display unit (3) is fixed, the unit support member (44) being coupled to the rotation member (43) and being rotatable together with the rotation member (43), and
the cable (30) is wired from the back surface of the display unit (3) into the main body (1) via an inside of the inner opening (430) and an inside of the cable cover (5).

5. The image forming apparatus (10) according to claim 4, wherein
the display unit (3) is supported by the support mechanism (4) while being rotatable between a forward attitude in which the screen faces toward a front of the main body (1) along a horizontal direction and an upward attitude in which the screen faces an upward vertical direction.
